# EUROPÄISCHE PATENTANMELDUNG

(11) **EP 2 511 622 A2**
(43) Veröffentlichungstag der Anmeldung: **17.10.2012**
(21) Anmeldenummer: 12164121.1
(22) Anmeldetag: 13.04.2012
(51) Int. Cl.: F24J 2/04, F24J 2/52

(54) **Solarmodulanordnung, Indachbefestigungssystem und Abschlussprofil für ein Indachbefestigungssystem**

(30) Priorität: 15.04.2011 DE 202011005449 U
(71) Anmelder: Mounting Systems GmbH, 15834 Rangsdorf (DE)
(72) Erfinder: Die Erfindernennung liegt noch nicht vor
(74) Vertreter: Eisenführ, Speiser & Partner

(57) **Zusammenfassung**

Die Erfindung betrifft eine Solarmodulanordnung (700), ein Indachbefestigungssystem (500) für Solarmodule (600) sowie ein Abschlussprofil (100,200) für einen Feldabschluss eines Infachbefestigungssystems (500). Durch die Verwendung von zueinander verschiebbaren Profilen (100,200) zur Überbrückung des Abstands zwischen jeweils zwei Profilschienen des Indachbefestigungssystems (500) müssen Abschlussprofile nicht eigens zugeschnitten werden.

## Beschreibung

Die Erfindung betrifft ein Abschlussprofil für einen Feldabschluss für ein Indachbefestigungssystem für eine Solarmodulanordnung. Des Weiteren betrifft die Erfindung ein Indachbefestigungssystem für Solarmodule mit einem Feldabschluss, sowie eine Solarmodulanordnung.

Unter einem Solarmodul wird jedes Element verstanden, welches zur Umwandlung von Sonnenlicht in eine Art von nutzbarer Energie dient. Insbesondere wird unter einem Solarmodul ein Photovoltaikmodul oder ein Sonnenkollektormodul verstanden.

Indachbefestigungssysteme für Solarmodule werden verwendet, um Solarmodule an der Stelle von Dachziegeln auf Schrägdächer zu montieren. Üblicherweise werden hierzu in einem gewissen Bereich des Schrägdaches die Dachziegel entfernt und das Indachbefestigungssystem im gleichen Bereich eingebaut. Durch Einbau der Solarmodule wird daraus eine Solarmodulanordnung. Besonders wichtig ist es, dass die Solarmodulanordnung gegenüber dem Eindringen von Regen und Feuchtigkeit dicht ist. Dies gilt sowohl innerhalb der Solarmodulanordnung wie auch beim Übergang zwischen angrenzenden Dachziegeln und der Solarmodulanordnung.

Indachbefestigungssysteme weisen oft eine Vielzahl von Profilschienen auf, welche in Richtung von der Traufe zum First verlaufen.

Üblicherweise werden für einen oberen Feldabschluss von Indachbefestigungssystemen Abschlussprofile verwendet, welche auf Profilschienen des Indachbefestigungssystems montiert sind. Die Länge solcher Abschlussprofile muss dabei genau an das jeweilige Modul angepasst werden. Beispielsweise ist die Länge eines solchen Abschlussprofils gleich zum Abstand zwischen zwei Profilschienen oder einem ganzzahligen Vielfachen davon. Dies erfordert ein vorheriges Zuschneiden der Abschlussprofile. Händler die unterschiedliche Indachbefestigungssysteme für unterschiedliche Modulgrößen anbieten, müssen unterschiedliche Bauteile für die jeweiligen oberen Feldabschlüsse bevorraten. Dies führt zu einer Verkomplizierung der Montage und der dazugehörigen Logistik.

Wünschenswert wäre es, einen oberen Feldabschluss aus universell verwendbaren Teilen zusammensetzen zu können.

Gemäß einem ersten Aspekt der Erfindung wird dies erreicht durch ein Abschlussprofil für ein Indachbefestigungssystem für eine Solarmodulanordnung, wobei das Abschlussprofil eine ebene Abschlusswand aufweist. Das Abschlussprofil ist in einer zu einer Längsrichtung der Abschlusswand senkrecht stehenden Querschnittsebene betrachtet im Wesentlichen U-förmig mit einem ersten Schenkel und einem zweiten Schenkel, die von der Abschlusswand abstehen. Ferner weist der erste Schenkel ein Führungselement zum Führen eines in einem Einbauzustand mit dem Abschlussprofil in Eingriff zu bringenden zweiten Abschlussprofils entlang nur der Längsrichtung der Abschlusswand auf.

Die Abschlusswand des erfindungsgemäßen Abschlussprofils bildet im Einbauzustand einen oberen Abschluss des Indachbefestigungssystems und der damit aufgebauten Solarmodulanordnung. Sie steht üblicherweise quer zu einer Dachfläche und verläuft horizontal.

Durch das Führungselement des erfindungsgemäßen Abschlussprofils wird es ermöglicht, dass ein zweites Abschlussprofil auf das Abschlussprofil aufgesteckt oder in dieses hineingesteckt wird, wobei die beiden Profile üblicherweise parallele Längsrichtungen haben. Aufgabe des Führungselements ist es dabei, eine mögliche Bewegung des auf-oder hineingesteckten weiteren Profils nur noch in der Längsrichtung der Abschlusswand des Abschlussprofils zu erlauben. Dies ermöglicht einen Aufbau eines Feldabschlusses eines Indachbefestigungssystems dergestalt, dass auf jeder Profilschiene des Indachbefestigungssystems ein erfindungsgemäßes Abschlussprofil montiert wird, wobei die Abschlussprofile jedoch nicht die gesamte Strecke zwischen den Profilschienen überdecken. Vielmehr wird der dazwischenliegende Bereich durch ein zweites Abschlussprofil überdeckt, welches auf die Abschlussprofile aufgesteckt wird oder in diese hineingesteckt wird. Da die jeweiligen Führungselemente ein Verschieben und damit auch eine Längenänderung zwischen den Abschlussprofilen ermöglichen, kann eine solche Verbindung einfach montiert werden.

Gemäß einer Ausführungsform ist das Führungselement eine Einkerbung auf einer dem zweiten Schenkel abgewandten Seite oder ein Vorsprung auf einer dem zweiten Schenkel zugewandten Seite. Beides kann dadurch erreicht werden, dass das Material des Abschlussprofils entlang einer in Längsrichtung verlaufenden Linie nach innen eingedrückt wird. Gemäß einer alternativen Ausführungsform kann das Führungselement jedoch auch eine Einkerbung auf einer dem zweiten Schenkel zugewandten Seite oder ein Vorsprung auf einer dem zweiten Schenkel abgewandten Seite sein. Auch dies kann einfach dadurch erreicht werden, dass entlang einer in Längsrichtung verlaufenden Linie das Material des Abschlussprofils in einer Richtung von dem zweiten Schenkel wegweisend eingedrückt wird.

Eine Einkerbung in dem Abschlussprofil kann mit einem Vorsprung in einem zweiten Abschlussprofil in Eingriff kommen, um die gewünschte Führungswirkung zu erreichen. Ebenso kann ein Vorsprung im Abschlussprofil mit einer Einkerbung im zweiten Abschlussprofil in Eingriff kommen, um ebenso die gewünschte Führungswirkung zu erreichen. Das Abschlussprofil und das weitere Profil sind somit komplementär, und zwar besonders bezüglich ihrer Führungselemente.

Bevorzugt weist der erste Schenkel oder der zweite Schenkel ferner einen ersten Vorsprung und einen zweiten Vorsprung auf, welche auf der dem jeweils anderen Schenkel abgewandten Seite angeordnet sind. Weiter bevorzugt stehen der erste Vorsprung und der zweite Vorsprung gleich weit von dem jeweiligen Schenkel ab. Die Vorsprünge dienen dazu, bei Montage des Abschlussprofils auf eine Profilschiene einen Abstand zwischen dem Schenkel und der Profilschiene vorzusehen. Hierzu wird das Abschlussprofil so auf der Profilschiene montiert, dass die beiden Vorsprünge auf der Profilschiene aufliegen.

Bevorzugt sind die Vorsprünge an dem ersten Schenkel angeordnet, d. h. an dem gleichen Schenkel, an welchem sich auch das Führungselement befindet. Dabei ist es ferner bevorzugt, dass das Führungselement näher an der Abschlusswand angeordnet ist als der erste Vorsprung und der zweite Vorsprung. Dies ermöglicht es, ein zweites Abschlussprofil über das Abschlussprofil zu stecken, wobei ein Führungselement des zweiten Abschlussprofils mit dem Führungselement des Abschlussprofils in Eingriff kommt. Bei Montage des Abschlussprofils auf eine Profilschiene wird durch die Vorsprünge sichergestellt, dass ein entsprechender Schenkel des weiteren Profils zwischen den ersten Schenkel des Abschlussprofils und die Profilschiene passt. Damit kann das zweite Abschlussprofil auch im montierten Zustand in der Richtung, welche das Führungselement zulässt, verschoben werden.

In einer bevorzugten Ausführung sind der erste Schenkel und die Abschlusswand quer zueinander angeordnet. In einer weiteren bevorzugten Ausführung sind der zweite Schenkel und die Abschlusswand quer zueinander angeordnet. Besonders bevorzugt ist es, dass sowohl der erste Schenkel und die Abschlusswand wie auch der zweite Schenkel und die Abschlusswand jeweils quer zueinander angeordnet sind. Damit ergibt sich eine besonders einfache Ausführung des Abschlussprofils.

Gemäß einem zweiten Aspekt betrifft die Erfindung ein Indachbefestigungssystem für Solarmodule, wobei das Indachbefestigungssystem mindestens zwei Profilschienen aufweist. Das Indachbefestigungssystem hat dabei einen Feldabschluss mit einer ganzzahligen Anzahl n von Abschlussprofilen gemäß dem ersten Aspekt der Erfindung, nachfolgend Feldabschlussprofile genannt, und ferner einer Anzahl n - 1 von weiteren, zu den Feldabschlussprofilen komplementären Profilen mit jeweils einem Führungselement, nachfolgend Feldabschlussverbindungsprofile genannt. Die Feldabschlussprofile sind jeweils auf einer Profilschiene montiert und die Feldabschlussverbindungsprofile sind jeweils zwischen den Feldabschlussprofilen angeordnet. Jeweilige Längsrichtungen der Feldabschlussprofile und der Feldabschlussverbindungsprofile sind parallel zueinander ausgerichtet. Führungselemente der Feldabschlussverbindungsprofile stehen mit Führungselementen der Feldabschlussprofile in Eingriff.

Die beschriebenen Varianten und Vorteile der Abschlussprofile gemäß dem ersten Aspekt der Erfindung treffen auch auf das Indachbefestigungssystem gemäß dem zweiten Aspekt der Erfindung zu.

Das erfindungsgemäße Indachbefestigungssystem hat den Vorteil, dass keine exakt auf den Abstand zwischen den Profilschienen angepassten Bauteile benötigt werden. Die Feldabschlussprofile können auf den Profilschienen montiert werden, während die Feldabschlussverbindungsprofile den Zwischenraum zwischen den Feldabschlussprofilen überbrücken. Da der jeweilige Überlapp zwischen einem Feldabschlussprofil und einem Feldabschlussverbindungsprofil verschieden groß ausfallen kann, können mit den gleichen Bauteilen unterschiedliche Abstände zwischen den Profilschienen überbrückt werden.

Bei den Feldabschlussverbindungsprofilen handelt es sich bevorzugt um solche Profile, welche ebenfalls Merkmale von Abschlussprofilen gemäß dem ersten Aspekt der Erfindung aufweisen. Für den Zusammenbau eines Feldabschlusses müssen sie sich jedoch zumindest insofern von den Feldabschlussprofilen unterscheiden, als sie zu diesen komplementär sein müssen. Dies bedeutet im Normalfall, dass die Feldabschlussverbindungsprofile entweder etwas größer oder etwas kleiner ausgeführt sind, so dass sie auf die Feldabschlussprofile aufgesteckt oder in diese eingesteckt werden können. Außerdem müssen die Führungselemente der Feldabschlussverbindungsprofile so ausgebildet sein, dass sie zu den Feldabschlussprofilen komplementär sind, d. h. dass sie zusammenwirkend die gewünschte Führungswirkung erreichen. Beispielhafte Ausführungen komplementärer Führungselemente wurden bereits mit Bezug auf den ersten Aspekt der Erfindung beschrieben.

Sowohl das Feldabschlussprofil wie auch das Feldabschlussverbindungsprofil zeigen im Wesentlichen eine U-Form. Bezüglich dieser U-Form kann eine innere und äußere Kontur definiert werden. Als innere Kontur wird dabei jeweils die Kombination derjenigen Seiten der jeweiligen Schenkel und der Abschlusswand definiert, welche einen dreiseitigen Raum begrenzen. Anders ausgedrückt weisen die Seiten der Schenkel, welche Bestandteil der inneren Kontur sind, aufeinander zu, und die Seite der Abschlusswand, welche ebenfalls Bestandteil der inneren Kontur ist, liegt auf derselben Seite des Profils. Demgegenüber wird als äußere Kontur die Kombination derjenigen Seiten der Schenkel und der Abschlusswand definiert, welche der inneren Kontur unmittelbar gegenüberliegen. Anders ausgedrückt handelt es sich bei der äußeren Kontur um gerade diejenigen Seiten, welche keinen Raum begrenzen.

Bevorzugt liegt eine bezüglich der U-Form innere Kontur der Feldabschlussverbindungsprofile an einer bezüglich der U-Form äußeren Kontur der Feldabschlussprofile unmittelbar an und entspricht dieser, soweit die Konturen benachbart sind. In einer alternativen, ebenso bevorzugten Ausführung liegt eine bezüglich der U-Form äußere Kontur der Feldabschlussverbindungsprofile an eine bezüglich der U-Form innere Kontur der Feldabschlussprofile unmittelbar an und entspricht dieser, soweit die Konturen benachbart sind. Bei diesen Ausführungen werden die Feldabschlussverbindungsprofile unmittelbar auf die Feldabschlussprofile aufgesteckt bzw. in diese hineingesteckt, ohne dass zwischen den Feldabschlussverbindungsprofilen und den Feldabschlussprofilen größere Zwischenräume entstehen. Damit wird eine einfache, spielfreie und haltbare Ausführung erreicht.

Gemäß einer Ausführung sind die jeweiligen ersten Schenkel der Feldabschlussprofile länger als die jeweiligen zweiten Schenkel der Feldabschlussprofile. Dies trägt dem erhöhten Platzbedarf von Führungselement sowie erstem und zweitem Vorsprung am ersten Schenkel Rechnung, sofern diese am ersten Schenkel ausgebildet sind. Der zweite Schenkel kann demgegenüber kürzer ausgeführt sein.

Gemäß einer weiteren Ausführung sind die jeweiligen ersten Schenkel und zweiten Schenkel der Feldabschlussverbindungsprofile gleich lang. Da diese nicht an die Profilschienen montiert werden, wird an den Platz, welchen sie vorsehen, keine hohe Anforderung gestellt. Durch die Ausführung mit gleich langen Schenkeln ergeben sich eine einfache Herstellbarkeit sowie Vorteile bei Transport und Lagerung.

Bevorzugt weist das Indachbefestigungssystem ferner ein Abschlussblech über den Feldabschlussverbindungsprofilen und den Feldabschlussprofilen auf, welches mit den Feldabschlussverbindungsprofilen und den Feldabschlussprofilen verschraubt ist. Durch die Verschraubung mit beiden Profilarten werden die Feldabschlussverbindungsprofile und die Feldabschlussprofile zueinander auch in der Richtung fixiert, in welchen die Führungselemente noch eine Bewegung zulassen. Damit ist der Feldabschluss starr und nicht mehr beweglich. Das Abschlussblech wird bevorzugt unter eine Reihe von oberhalb des Indachbefestigungssystem liegenden Ziegeln eingeführt. Damit stellt es einen regensicheren oberen Abschluss dar.

Gemäß einem dritten Aspekt betrifft die Erfindung eine Solarmodulanordnung mit einem Indachbefestigungssystem gemäß dem zweiten Aspekt der Erfindung. Eine solche Solarmodulanordnung weist eine Vielzahl von Solarmodulen auf. Die beschriebenen Varianten und Vorteile des Indachbefestigungssystems treffen ebenso auf die Solarmodulanordnung zu.

Bevorzugt grenzt an den Feldabschluss eine Dichtung eines Dichtungsprofils an, welche die jeweils bezüglich der U-Form äußeren Konturen der Abschlusswände der Feldabschlussverbindungsprofile und der Feldabschlussprofile berührt. Damit kann eine wasserdichte Verbindung zwischen dem Feldabschluss und der obersten Reihe von Solarmodulen erreicht werden. Etwaige Unebenheiten durch den Übergang zwischen Feldabschlussverbindungsprofil und Feldabschlussprofil werden durch eine ausreichende Dicke der Dichtung ausgeglichen.

Besonders bevorzugt ist das Dichtprofil identisch zu weiteren Dichtprofilen, welche zwischen vertikal benachbarten Solarmodulen eingebaut sind. Damit ist es nur nötig, eine Art von Dichtprofilen zum Montageort und auf das Dach zu nehmen, da identische Dichtprofile sowohl für die Dichtung zwischen Reihen von Solarzellen wie auch zum Feldabschluss verwendet werden können.

Ausführungsbeispiele der Erfindung sind auch in den Ansprüchen angegeben. Weitere Ausführungsbeispiele werden nachfolgend anhand der beigefügten Figuren beschrieben.
Fig. 1: zeigt ein Ausführungsbeispiel eines erfindungsgemäßen Abschlussprofils, nämlich eines Feldabschlussprofils in Querschnittsansicht.
Fig. 2: zeigt ein Ausführungsbeispiel eines erfindungsgemäßen Abschlussprofils, nämlich eines Feldabschlussverbindungsprofils in Querschnittsansicht.
Fig. 3: zeigt ein erfindungsgemäßes Feldabschlussprofil und ein erfindungsgemäßes Feldabschlussverbindungsprofil in montiertem Zustand in Querschnittsansicht.
Fig. 4: zeigt eine erfindungsgemäße Solarmodulanordnung mit einem erfindungsgemäßen Indachbefestigungssystem.
Fig. 5: zeigt die Solarmodulanordnung von Fig. 4 in anderer Perspektive und mit teilweise anderen Komponenten.

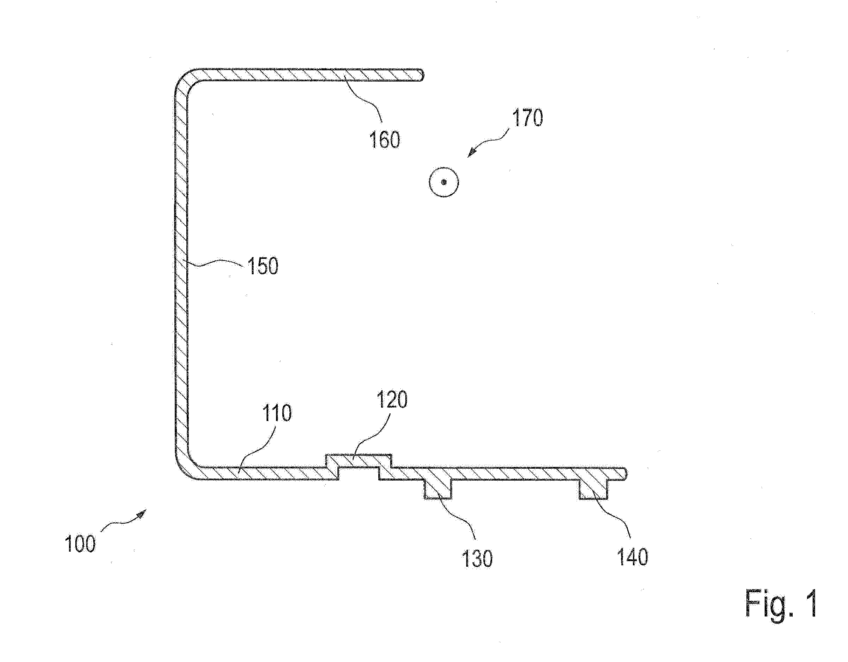

Fig. 1 zeigt eine Querschnittsansicht eines erfindungsgemäßen Abschlussprofils, nämlich eines Feldabschlussprofils 100. Das Feldabschlussprofil 100 weist einen ersten Schenkel 110 und einen zweiten Schenkel 160 auf. Zwischen dem ersten Schenkel 110 und dem zweiten Schenkel 160 befindet sich eine Abschlusswand 150. Der erste Schenkel 110 und der zweite Schenkel 160 liegen jeweils quer zur Abschlusswand 150. Senkrecht auf der Papierebene von Fig. 1 steht eine Längsrichtung 170 derAbschlusswand 150.

Der erste Schenkel 110 weist ein Führungselement 120 auf. Das Führungselement 120 ist durch eine lokale Deformation des ersten Schenkels 110 in Richtung auf den zweiten Schenkel 160 zugewandt ausgebildet. Hierdurch entsteht auf einer dem zweiten Schenkel 160 zugewandten Seite des ersten Schenkels 110 ein Vorsprung, wobei gleichzeitig auf einer dem zweiten Schenkel 160 abgewandten Seite des ersten Schenkels 110 eine Einkerbung entsteht.

Des Weiteren weist der erste Schenkel 110 einen ersten Vorsprung 130 und einen zweiten Vorsprung 140 auf. Der erste Vorsprung 130 und der zweite Vorsprung 140 stehen gleich weit von dem ersten Schenkel 110 ab. Der zweite Vorsprung 140 befindet sich weiter entfernt von der Abschlusswand 150 als der erste Vorsprung 130, welcher sich wiederum weiter entfernt von der Abschlusswand 150 befindet als das Führungselement 120.

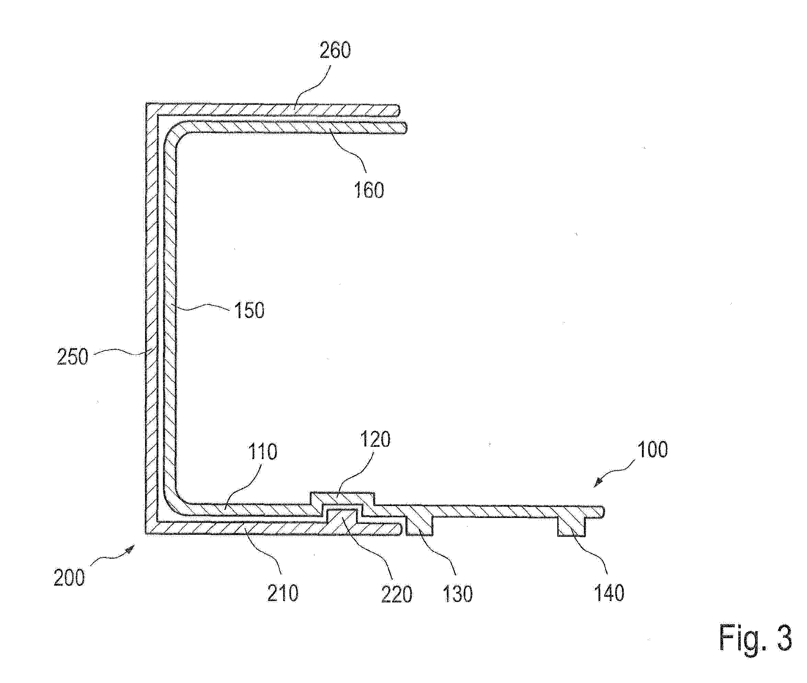

Das Feldabschlussprofil 100 kann als Teil eines oberen Feldabschlusses eines Indachbefestigungssystems für Solarmodule verwendet werden. Einzelheiten hierzu sind mit Bezug auf die Fig. 3 - 5 näher beschrieben.

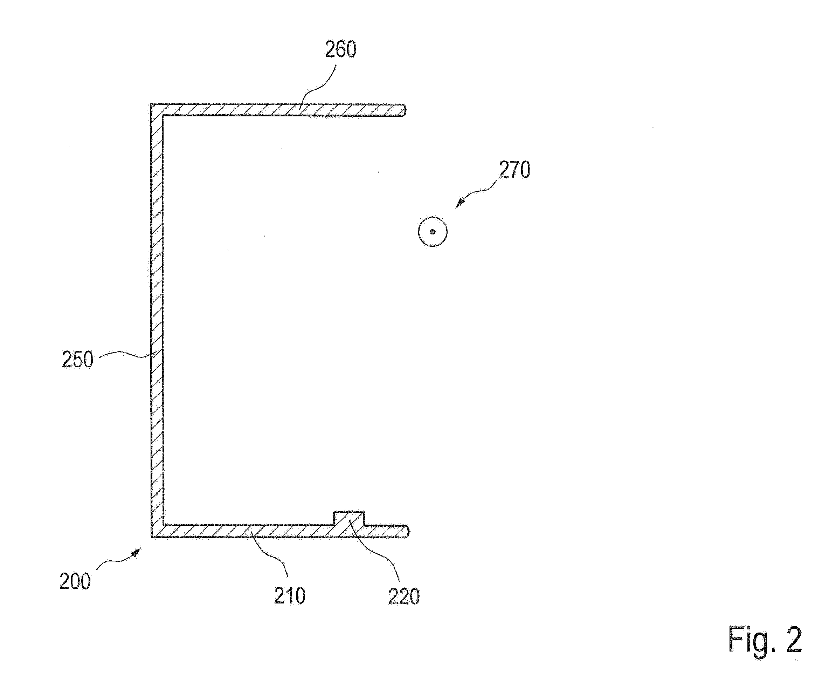

Fig. 2 zeigt eine Querschnittsansicht eines erfindungsgemäßen Abschlussprofils, nämlich eines Feldabschlussverbindungsprofils 200. Das Feldabschlussverbindungsprofil 200 weist einen ersten Schenkel 210 und einen zweiten Schenkel 260 auf. Zwischen dem ersten Schenkel 210 und dem zweiten Schenkel 260 befindet sich eine Abschlusswand 250, wobei der erste Schenkel 210 und der zweite Schenkel 260 quer zur Abschlusswand 250 liegen. Senkrecht auf der Papierebene von Fig. 2 steht eine Längsrichtung 270 der Abschlusswand 250.

Der erste Schenkel 210 weist ein Führungselement 220 auf, welches als Vorsprung aus dem ersten Schenkel 210 auf einer dem zweiten Schenkel 260 zugewandten Seite des ersten Schenkels 210 ausgebildet ist.

Das Feldabschlussverbindungsprofil 200 kann als Teil eines oberen Feldabschlusses eines Indachbefestigungssystems für Solarmodule verwendet werden. Einzelheiten hierzu sind mit Bezug auf Fig. 3 sowie die Fig. 5 und 6 beschrieben.

Fig. 3 zeigt eine Querschnittsansicht eines erfindungsgemäßen Feldabschlussprofils 100 und eines erfindungsgemäßen Feldabschlussverbindungsprofils 200 im montierten Zustand.

Wie in Fig. 3 ersichtlich ist entspricht eine innere Kontur des Feldabschlussverbindungsprofils 200 der äußeren Kontur des Feldabschlussprofils 100. Hierunter wird verstanden, dass das Feldabschlussverbindungsprofil auf dem Feldabschlussprofil aufsitzt, an diesem ohne wesentliches Spiel anliegt und dass das Führungselement 220 des Feldabschlussverbindungsprofils 200 mit dem Führungselement 120 des Feldabschlussprofils 100 derart in Eingriff kommt, dass eine Bewegung des Feldabschlussverbindungsprofils 200 relativ zum Feldabschlussprofil 100 nur noch quer zur Papierebene von Fig. 3 möglich ist. Die Begrifflichkeit, dass sich die Konturen entsprechen, bezieht sich natürlich bei den Schenkeln lediglich auf diejenigen Bereiche, in welchen die Schenkel überlappen.

Das Feldabschlussprofil 100 mit aufgesetztem Feldabschlussverbindungsprofil 200 kann auf eine Profilschiene eines Indachbefestigungssystems für Solarmodule, welches in Fig. 3 nicht gezeigt ist, montiert werden. Hierzu werden der erste Vorsprung 130 und der zweite Vorsprung 140 auf die Profilschiene aufgesetzt und das Feldabschlussprofil 100 mit Hilfe mindestens einer Schraube an der Profilschiene befestigt. Wie in Fig. 3 gezeigt ist, stehen der erste Vorsprung 130 und der zweite Vorsprung 140 so weit von dem ersten Schenkel 110 ab, dass der erste Schenkel 210 des Feldabschlussverbindungsprofils 200 sich im montierten Zustand oberhalb einer flachen Profilschiene befindet, auf welcher der erste Vorsprung 130 und der zweite Vorsprung 140 aufliegen. Damit ist eine problemlose Montierbarkeit sichergestellt. Außerdem kann das Feldabschlussverbindungsprofil 200 auch in montiertem Zustand noch in einer Richtung quer zur Papierebene von Fig. 3 bewegt werden, ohne durch eine darunterliegende Profilschiene eingeklemmt zu sein.

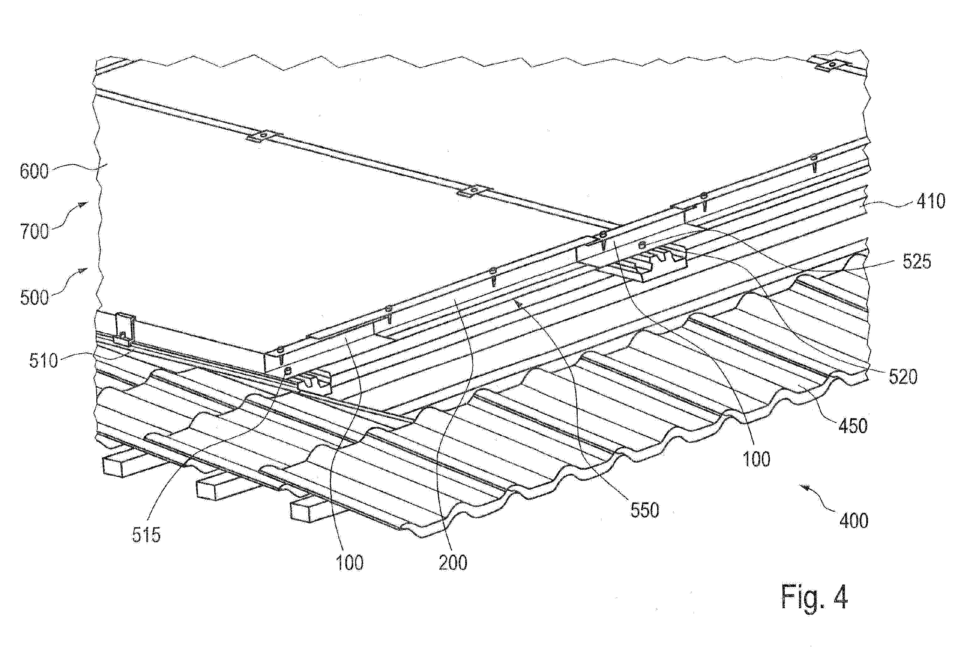

Fig. 4 zeigt ein Dach 400 mit einer erfindungsgemäßen Solarmodulanordnung 700, die ein erfindungsgemäßes Indachbefestigungssystem 500 und eine Vielzahl von Solarmodulen 600 aufweist. Das Indachbefestigungssystem 500 weist einen Feldabschluss 550 auf. Ein Abschlussblech, welches zur Gewährleistung von Dichtheit noch notwendig wäre, ist in Fig. 4 nicht gezeigt.

Das Dach 400 ist ein normales Schrägdach mit einer Vielzahl von Dachlatten 410 und darauf geschindelt gelagerten Dachziegeln 450. An Stelle der Dachziegel 450 befindet sich auf einem Teil des Dachs 400 das Indachbefestigungssystem 500 mit darauf gelagerten Solarmodulen 600. Das Indachbefestigungssystem 500 weist eine erste Profilschiene 510 und eine zweite Profilschiene 520 auf. Diese verlaufen jeweils in Richtung von der Traufe zum First. Um die Dichtigkeit des Indachbefestigungssystems 500 zu gewährleisten, ist es unter anderem nötig, einen dichten oberen Feldabschluss vorzusehen.

Hierzu ist, wie in Fig. 4 gezeigt, auf den Profilschienen 510, 520 jeweils ein Feldabschlussprofil 100 mittels je einer Schraube 515, 525 befestigt. Ebenso wie mit Bezug auf Fig. 3 beschrieben wurde, liegen die Feldabschlussprofile 100 mit ihren jeweiligen Vorsprüngen 130, 140 auf den Profilschienen 510, 520 auf. Zwischen den Feldabschlussprofilen 100 befindet sich ein Feldabschlussverbindungsprofil 200, welches außen auf die Feldabschlussprofile 100 aufgesteckt ist, wie mit Bezug auf Fig. 3 beschrieben wurde. Die Feldabschlussprofile 100 und das Feldabschlussverbindungsprofil 200 bilden somit einen durchgängigen oberen Abschluss des Indachbefestigungssystems 500.

Vor dem Montieren sind die Feldabschlussprofile 100 und das Feldabschlussverbindungsprofil 200 noch nicht starr miteinander verbunden. Vielmehr ist es möglich, das Feldabschlussverbindungsprofil 200 in Längsrichtung zu verschieben. Dementsprechend ist es nicht nötig, die Länge von Profilen, welche zum oberen Abschluss eingesetzt werden, exakt an einen Abstand zwischen der ersten Profilschiene 510 und der zweiten Profilschiene 520 anzupassen. Vielmehr genügt es, ein Feldabschlussverbindungsprofil 200 von einer ausreichenden Länge zu verwenden, dass ein gewisser Überlapp mit den Feldabschlussprofilen 100 erreicht wird. Somit ist es bei Verwendung des erfindungsgemäßen Feldabschlusses 550 nicht mehr nötig, einen eigenen Zuschnitt der Profile zum oberen Abschluss vorzunehmen. Ebenso kann dadurch die Länge der zum Montageort zu transportierenden Teile deutlich verringert werden, da die gesamte Strecke zwischen der ersten Profilschiene 510 und der zweiten Profilschiene 520 durch insgesamt drei Profile überbrückt wird.

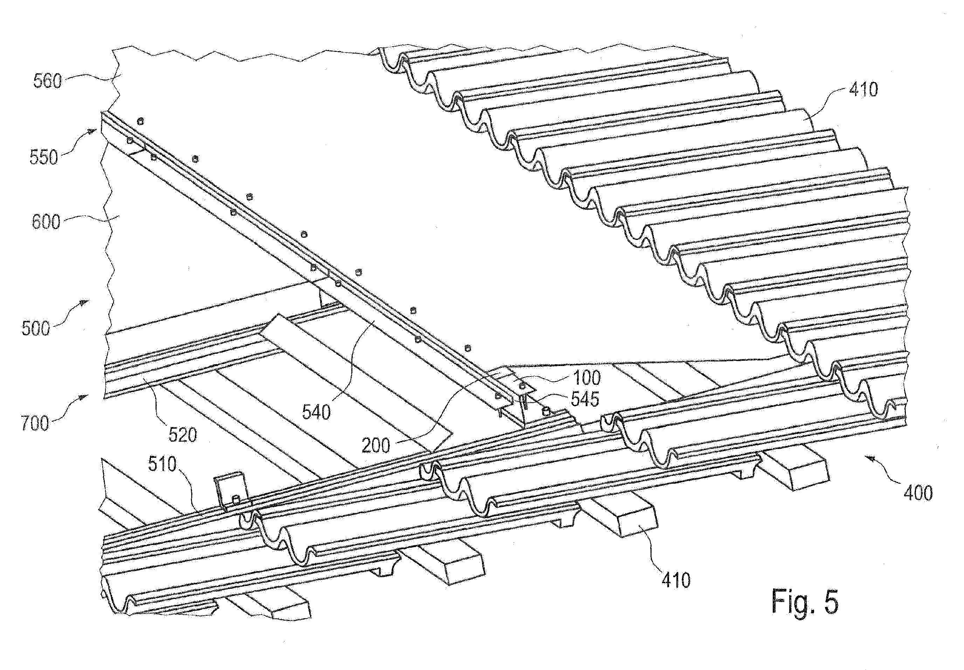

Fig. 5 zeigt das Dach 400 von Fig. 4 aus einer anderen Perspektive. Außerdem ist ein in Fig. 4 nicht dargestelltes Abschlussblech 560 in Fig. 5 gezeigt, wohingegen eine Solarzelle aus Darstellungsgründen nicht mehr gezeigt ist.

Das Abschlussblech 560 ist an mehreren Stellen mit den Feldabschlussprofilen 100 und den Feldabschlussverbindungsprofilen 200 verschraubt. Zum Einen wird hierdurch eine feste Verbindung zwischen einem Feldabschlussverbindungsprofil 200 und den jeweiligen Feldabschlussprofilen 100 hergestellt, so dass diese nicht mehr relativ zueinander bewegbar sind. Zum Anderen ist das Abschlussblech 560 unter die oben angrenzenden Ziegel 410 geschoben, so dass insgesamt eine Abdichtung des Feldabschlusses erreicht wird.

Unmittelbar an den Feldabschluss 550 grenzt ein Dichtungsprofil 540 an, welches zur Seite des Feldabschlusses 550 hin eine Dichtung 545 aus Gummi aufweist. Die Dichtung 545 liegt so eng an den bezüglich der U-Form äußeren Konturen der Abschlusswände der Feldabschlussverbindungsprofile 200 und der Feldabschlussprofile 100 an, dass eine Dichtigkeit des Systems gegenüber Regen und Feuchtigkeit erreicht wird. Eine etwaige Unebenheit, welche beim Übergang zwischen Feldabschlussprofil 100 und Feldabschlussverbindungsprofil 200 entstehen kann, wird durch eine ausreichende Dicke der Dichtung 545 ausgeglichen.

Identische Dichtprofile wie das Dichtprofil 540 können auch zwischen den jeweiligen Solarzellen entlang von horizontalen Linien, an welchen diese vertikal aneinandergrenzen, verwendet werden. Hierdurch wird die Anzahl an mitzuführenden unterschiedlichen Komponenten deutlich reduziert.

## Patentansprüche

1. Abschlussprofil (100, 200) für ein Indachbefestigungssystem (500) für eine Solarmodulanordnung (700), mit einer ebenen Abschlusswand (150, 250), wobei das Abschlussprofil (100, 200) in einer zu einer Längsrichtung (170, 270) der Abschlusswand (150, 250) senkrecht stehenden Querschnittsebene betrachtet im Wesentlichen U-förmig ist mit einem ersten Schenkel (110, 210) und einem zweiten Schenkel (160, 260), die von der Abschlusswand (150, 250) abstehen,
und wobei der erste Schenkel (110, 210) ein Führungselement (120, 220) zum Führen eines in einem Einbauzustand mit dem Abschlussprofil (100, 200) in Eingriff zu bringenden zweiten Abschlussprofils (100, 200) entlang nur der Längsrichtung (170, 270) der Abschlusswand (150, 250) aufweist.

2. Abschlussprofil (100, 200) gemäß Anspruch 1,
dessen Führungselement (120, 220) eine Einkerbung auf einer dem zweiten Schenkel (160, 260) abgewandten Seite oder ein Vorsprung auf einer dem zweiten Schenkel (160, 260) zugewandten Seite ist.

3. Abschlussprofil (100, 200) gemäß Anspruch 1,
dessen Führungselement (120, 220) eine Einkerbung auf einer dem zweiten Schenkel (160, 260) zugewandten Seite oder ein Vorsprung auf einer dem zweiten Schenkel (160, 260) abgewandten Seite ist.

4. Abschlussprofil (100, 200) gemäß einem der Ansprüche 1 bis 3,
dessen erster Schenkel (110, 210) oder dessen zweiter Schenkel (160, 260) ferner einen ersten Vorsprung (130) und einen zweiten Vorsprung (140) aufweist, welche auf der dem jeweils anderen Schenkel (100, 200) abgewandten Seite angeordnet sind.

5. Abschlussprofil (100, 200) gemäß Anspruch 4,
dessen erster Vorsprung (130) und dessen zweiter Vorsprung (140) gleich weit von dem Schenkel (100, 200) abstehen.

6. Abschlussprofil (100, 200) gemäß einem der Ansprüche 4 oder 5,
wobei die Vorsprünge an dem ersten Schenkel (110, 210) angeordnet sind und das Führungselement (120, 220) näher an der Abschlusswand (150, 250) angeordnet ist als der erste Vorsprung (130) und der zweite Vorsprung (140).

7. Abschlussprofil (100, 200) gemäß einem der Ansprüche 1 bis 6,
bei welchem der erste Schenkel (110, 210) und die Abschlusswand (150, 250) quer zueinander angeordnet sind,
oder bei welchem der zweite Schenkel (160, 260) und die Abschlusswand (150, 250) quer zueinander angeordnet sind.

8. Indachbefestigungssystem (500) für Solarmodule (600), welches mindestens zwei Profilschienen (510, 520) aufweist,
und mit einem Feldabschluss (550) mit einer ganzzahligen Anzahl n von Abschlussprofilen (100, 200) gemäß einem der Ansprüche 1 bis 7, nachfolgend Feldabschlussprofile (100) genannt, und ferner einer Anzahl n - 1 von weiteren, zu den Feldabschlussprofilen (100) komplementären Profilen (100, 200) mit jeweils einem Führungselement (120, 220), nachfolgend Feldabschlussverbindungsprofile (200) genannt,
wobei die Feldabschlussprofile (100) jeweils auf einer Profilschiene (510, 520) montiert sind und die Feldabschlussverbindungsprofile (200) zwischen den Feldabschlussprofilen (100) angeordnet sind,
wobei jeweilige Längsrichtungen (170, 270) der Feldabschlussprofile (100) und der Feldabschlussverbindungsprofile (200) parallel zueinander ausgerichtet sind,
und wobei Führungselemente (220) der Feldabschlussverbindungsprofile (200) mit Führungselementen (120) der Feldabschlussprofile (100) in Eingriff stehen.

9. Indachbefestigungssystem (500) gemäß Anspruch 8,
wobei eine bezüglich der U-Form innere Kontur der Feldabschlussverbindungsprofile (200) an eine bezüglich der U-Form äußeren Kontur der Feldabschlussprofile (100) unmittelbar anliegt und dieser entspricht, soweit die Konturen benachbart sind.

10. Indachbefestigungssystem (500) gemäß Anspruch 8,
wobei eine bezüglich der U-Form äußere Kontur der Feldabschlussverbindungsprofile (200) an eine bezüglich der U-Form innere Kontur der Feldabschlussprofile (100) unmittelbar anliegt und dieser entspricht, soweit die Konturen benachbart sind.

11. Indachbefestigungssystem (500) gemäß einem der Ansprüche 8 bis 10,
wobei die jeweiligen ersten Schenkel (110) der Feldabschlussprofile (100) länger sind als die jeweiligen zweiten Schenkel (160) der Feldabschlussprofile (100),
oder wobei die jeweiligen ersten Schenkel (210) und zweiten Schenkel (260) der Feldabschlussverbindungsprofile (200) gleich lang sind.

12. Indachbefestigungssystem (500) gemäß einem der Ansprüche 8 bis 11,
welches ferner ein Abschlussblech (560) über den Feldabschlussverbindungsprofilen (200) und den Feldabschlussprofilen (100) aufweist, welches mit den Feldabschlussverbindungsprofilen (200) und den Feldabschlussprofilen (100) verschraubt ist.

13. Solarmodulanordnung (700) mit einem Indachbefestigungssystem (500) gemäß einem der Ansprüche 8 bis 12 und einer Vielzahl von Solarmodulen (600).

14. Solarmodulanordnung (700) gemäß Anspruch 13,
bei welcher an den Feldabschluss (550) eine Dichtung (545) eines Dichtprofils (540) angrenzt, welche die jeweils bezüglich der U-Form äußeren Konturen der Abschlusswände (150, 250) der Feldabschlussverbindungsprofile (200) und der Feldabschlussprofile (100) berührt.

15. Solarmodulanordnung (700) gemäß Anspruch 14,
bei welcher das Dichtprofil (540) identisch ist zu weiteren Dichtprofilen (540), welche zwischen vertikal benachbarten Solarmodulen (600) eingebaut sind.
